# EUROPEAN PATENT SPECIFICATION

(11) **EP 3 544 926 B1**
(45) Date of publication and mention of the grant of the patent: **02.03.2022**
(21) Application number: 16922182.7
(22) Date of filing: 28.11.2016
(51) Int. Cl.: B67D 7/40, B67D 7/06, B67D 7/38, B67D 7/04, F16L 3/12, F16L 3/13, F16L 3/133

(54) **HOSE CLIP**
SCHLAUCHSCHELLE
COLLIER DE SERRAGE POUR TUYAUX FLEXIBLES

(43) Date of publication of application: 02.10.2019
(73) Proprietor: Wayne Fueling Systems LLC, Austin, TX 78728 (US)
(72) Inventor: LARSSON, Bengt, I., 274 53 Skivarp (SE); WINGREN, Caroline, 211 56 Malmö (SE); HANSSON, Jonas, 21440 Malmö (SE); MARTENSSON, Mattias, G., 244 33 Kavlinge (SE)
(74) Representative: AWA Sweden AB
(86) International application number: PCT/US2016/063837
(87) International publication number: WO 2018/097834

(56) References cited:
- EP-A1- 0 255 979
- FR-A1- 2 578 006
- GB-A- 2 289 112
- US-A- 3 672 395
- US-A- 6 149 399
- US-B1- 6 199 579
- US-B1- 6 438 801

## Description

### FIELD

Devices are provided for retaining and releasing a hose.

### BACKGROUND

Fuel dispensing units generally have one or more nozzles for dispensing fuel. Each nozzle is connected to the unit by a long section of fuel hose. The units can have a variety of configurations, and a common configuration is a high-hose design in which very long fuel hoses extend from a housing of the fuel dispensing unit to the nozzle, and have a portion that drapes near the base of the dispenser. A long fuel hose can make it easier to connect a fuel nozzle on the end of a long hose to a vehicle. For example if a vehicle parks on the wrong side of a fuel dispensing unit, a longer hose can allow a user to still refuel his or her vehicle without having to move the vehicle. The longer length of the hose is generally not required during most uses because users will generally park on the correct side of a fuel dispensing unit. However when the longer length of hose is required, it is preferable to return the excess hose length to the unit. Some users might be unwilling or unable to return longer fuel hoses to the fuel dispensers, and may leave the hose lying on the ground.

Some fuel dispensing units employ a hose retractor/retriever mechanism that releases an excess length of hose as needed, and that automatically retracts the hose once fuel dispensing is complete. Some stations use a spring-actuated reel mounted on or within a fuel dispensing unit and a retriever cable of the reel is connected to the fuel hose so that the hose will be automatically urged to return to the fuel dispensing unit when the use of the hose is completed. In other words, instead of retracting the hose into the fuel dispensing unit after each use, the retriever cable is retracted into its housing and at least most of the hose is held off of the ground by the retriever cable while still on the outside of the pump. This reel system can also be expensive and difficult to maintain.

While fuel hose retractors can be effective, the fuel dispensing station must purchase and install the retractors, as well as maintain and repair the retractors. For some stations, this can be expensive and problematic. One inexpensive alternative is to place a hook on a top of a fuel dispensing unit. However, returning the hose to the hook would require a customer or a fuel dispensing station attendant to maneuver a fuel hose high enough to loop the hose around the hook, which may not be desirable or physically possible for customers and/or attendants. Many hoses have a coaxial configuration (hose in a hose design), where the fuel flows in one coaxial line and recovered vapors flow back through the other. Typically, such hoses are substantially heavier per unit length compared to simple hoses, making it even more difficult for a user to physically maneuver the heavier hose back onto a hook.

EP 0 255 979 A1 discloses a fuel delivery pump column for a fuel filling station provided with at least one filling gun or nozzle and one filling hose and structure for varying the pivot point or point of suspension of the filling hose.

GB 2 289 112 A discloses a compressor for a refrigerator or freezer has a delivery pipe provided with a vibration damper block. The block is of extended U-shape, comprising a pair of side-by-side limbs interconnected by a convexly curved web, and being mounted astride the pipe. The block is formed in one piece and has, at a position corresponding to the end portions of its limbs adjacent the web of the U, a constriction which decreases in width towards the web of the U, merging into a cavity which is of a cross-section in the form of a circular arc having a diameter greater than the minimum width of the constriction. The block is preferably made of thermoplastic polyester material.

FR 2 578 006 A1 discloses a fastening device for elongate accessories, such as tubes or electric wires. The fastening device comprises a channel able to receive an accessory, a blocking member forming the catch connected to the base of the device by an elastic tab, a housing adapted so as to receive the catch and to free the channel as well as a locking member against which the blocking member comes to rest when a stress is exerted on it towards the opening of the channel.

### SUMMARY

Devices are provided for retaining and releasing a hose, such as a fuel hose on a fuel dispensing unit. In one aspect, a hose clip is provided that includes a frame configured to be secured to a support structure. The frame defines an opening for receiving a hose, and a blocking element is coupled to the frame. The blocking element being movable between a first position in which the blocking element blocks access to the opening and blocks the opening to retain the hose therein once the hose is attached to the clip, and a second position in which the blocking element is moved away from the opening for allowing passage of a hose through the opening. The blocking element moves from the first position to the second position during insertion of a hose into the frame such that a first force is required to insert the hose into the frame, and the blocking element can remain in the first position during retraction of the hose from the frame such that a second force that is greater than the first force is required to retract the hose from the frame.

In another embodiment, a hose clip is provided that has a frame with a mounting portion and first and second arms extending therefrom and defining a hose-receiving opening therebetween. The first and second arms can be biased toward one another to retain a hose therebetween, and a blocking element can be coupled to at least one of the first and second arms. The blocking element can be configured to move out of the opening during insertion of a hose into the opening between the first and second arms, and the blocking element can extend across the opening during retraction of the hose from the opening such that the first and second arms must move away from one another to remove the hose from the opening.

The hose clip can have numerous variations. For instance, the blocking element can be biased to extend across the opening. In another example, the blocking element can be configured to pivot to move out of the opening. The blocking element can be configured to slide to move out of the opening. The first and second arms can also converge toward the opening.

In another aspect, a fuel dispenser is provided that includes a housing with a base cabinet including fuel dispensing components disposed therein, a top portion coupled to the base cabinet, and a hose in fluid communication with the fuel dispensing components such that fuel can be delivered from the fuel dispensing components through the hose for delivery to a motor vehicle. A hose clip can be mounted on the top portion and can have an opening for removably retaining the hose therein, or the hose clip is configured to allow insertion of the hose into the opening with a first force and to allow removal of the hose with a second force that is greater than the first force.

The fuel dispenser has numerous variations. The hose clip can be configured such that insertion of the hose into the opening is in a substantial vertical direction. The hose clip can be biased to retain the hose therein. In another example, the hose clip can have a first part and a second part that move away from each other to allow the hose to be removed from the hose clip.

### BRIEF DESCRIPTION OF THE DRAWINGS

The invention will be more fully understood from the following detailed description taken in conjunction with the accompanying drawings, in which:
FIG. 1 is a front perspective view of a fuel dispensing unit;
FIG. 2 is a front perspective view of a top portion of the fuel dispensing unit of FIG. 1;
FIG. 3A is a front perspective view of one embodiment of a hose clip;
FIG. 3B is a back perspective view of the hose clip of FIG. 3A;
FIG. 3C is a front perspective view of a top portion of a fuel dispensing unit including the hose clip of FIG. 3A and a fuel hose retained within the hose clip;
FIG. 3D is another front perspective view of the top portion of the fuel dispenser and the hose clip of 3C releasing the hose;
FIG. 3E is another front perspective view of the top portion of the fuel dispenser and the hose clip of FIG. 3C during insertion of the hose;
FIG. 4A is a front perspective view of another embodiment of a hose clip;
FIG. 4B is a bottom perspective view of the hose clip of FIG. 4A;
FIG. 5A is a front perspective view of a top portion of a fuel dispenser with another embodiment of a hose clip;
FIG. 5B is a front perspective view of the hose clip of FIG. 5A;
FIG. 6A is a front perspective view of a top portion of a fuel dispenser with another embodiment of a hose clip; and
FIG. 6B is a front view of the hose clip of FIG. 6A.

### DETAILED DESCRIPTION

Certain exemplary embodiments will now be described to provide an overall understanding of the principles of the structure, function, manufacture, and use of the devices and methods disclosed herein. One or more examples of these embodiments are illustrated in the accompanying drawings. Those skilled in the art will understand that the devices specifically described herein and illustrated in the accompanying drawings are non-limiting exemplary embodiments and that the scope of the present invention is defined solely by the claims. The features illustrated or described in connection with one exemplary embodiment may be combined with the features of other embodiments. Such modifications and variations are intended to be included within the scope of the present invention.

Further, in the present disclosure, like-named components of the embodiments generally have similar features, and thus within a particular embodiment each feature of each like-named component is not necessarily fully elaborated upon. Additionally, to the extent that linear or circular dimensions are used in the description of the disclosed systems, devices, such dimensions are not intended to limit the types of shapes that can be used in conjunction with such systems, devices. A person skilled in the art will recognize that an equivalent to such linear and circular dimensions can easily be determined for any geometric shape. Sizes and shapes of the systems and devices, and the components thereof, can depend at least on the anatomy of the subject in which the systems and devices will be used, the size and shape of components with which the systems and devices will be used.

Various hose clips are provided for retaining and managing a hose. While the hose clips are described in connection with a fuel hose on a fuel dispensing unit, the hose clips can be used in connection with any type of hose. In an exemplary embodiment, various fuel hose clips are provided that require a high force to remove a hose, but that allow for easy re-attachment of the hose to the clip. In an exemplary embodiment, the hose clips provided herein generally include a frame with an opening for receiving a fuel hose and a blocking element capable of moving between a blocking position in which the opening is blocked to retain the fuel hose therein, and an open position that allows reattachment of the hose. The hose clips can require less force to return a hose to the clip than to remove the hose from the clip initially.

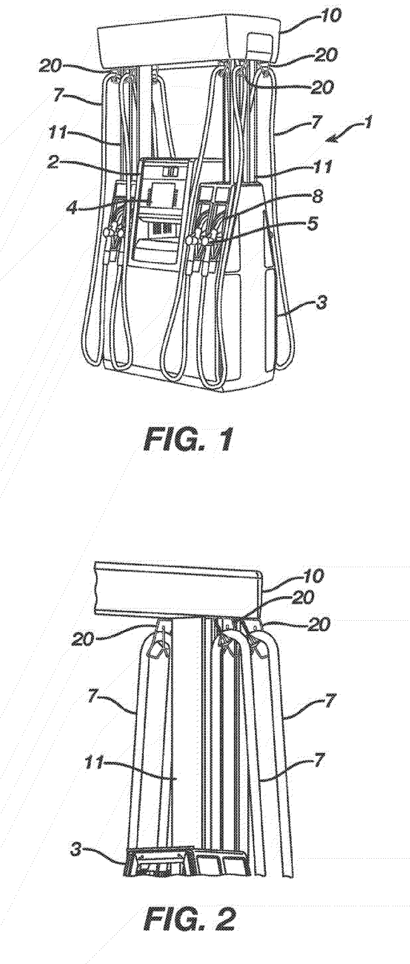

As noted above, in certain aspects the hose clips disclosed herein can be used with a fuel dispensing unit. FIG. 1 illustrates one embodiment of a fuel dispensing unit 1 for refueling motor vehicles. The illustrated fuel dispensing unit 1 has a high-hose design. In particular, the fuel dispensing unit 1 has a base cabinet 3 containing fuel dispensing means (not shown), e.g. fuel metering means, valves, vapor recovery system etc. The base cabinet 3 can be connected to an underground reservoir (not shown) containing fuel. The unit 1 can also have an electrical cabinet 2 seated on the base cabinet and containing all the electronics for dispensing fuel and for conducting payment transactions. One or more nozzle boots 8 can be built into the fuel dispensing unit 1 for seating a nozzle on the end of a house. One or more support arms 11 can extend from the base cabinet 3 and connect to a top portion 10 that extends over the top of the unit 1. One or more hoses 7 can extend from the base cabinet 3, couple to the top portion 10, and drape down below the nozzle boots 8. Each hose 7 can terminate in a fuel-dispensing nozzle 5. FIG. 1 illustrates four hoses 7 and four nozzles 5 on one side of the unit 1, and four hoses 7 and four nozzles 5 on the other side of the dispenser. A person skilled in the art will appreciate that the fuel dispensing unit can have various other configurations known in the art and can include any number of hoses and nozzles.

As shown in FIG. 2, one or more hose clips 20 can be mounted on the fuel dispensing unit 1, for example on an under surface of the top portion 10. In an exemplary embodiment, each fuel hose 7 is coupled to a corresponding hose clip 20. The hose clips 20 can be configured to releasably retain fuel hoses. In use, when the nozzle 5 is removed from the nozzle boot 8, the draped portion of the hose 7 should have sufficient length to allow the nozzle 5 to reach the user's gas tank. However, should extra length be needed, the hose 7 can be detached from the hose clip 20 to provide extra length, allowing the nozzle 5 to be positioned further away from the unit 1.

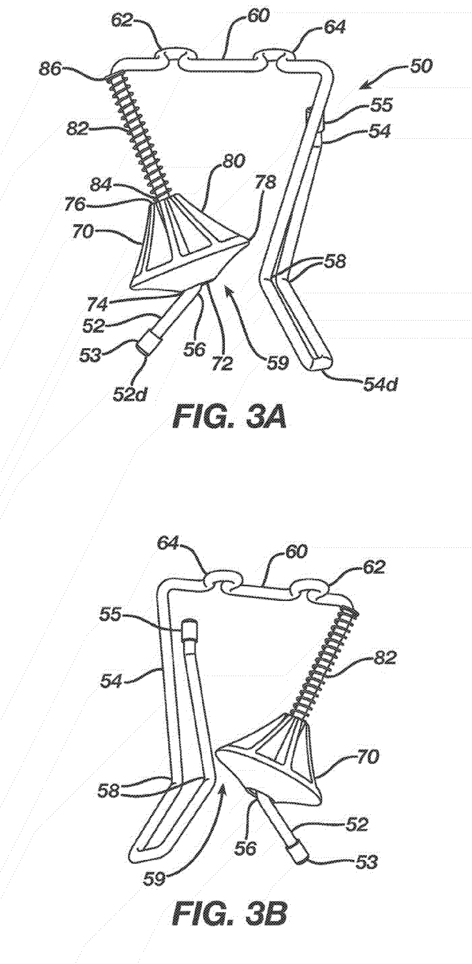

The hose clips can have a variety of configurations. FIGS. 3A-3B illustrate one embodiment of a hose clip 50. The illustrated clip 50 generally includes a frame with a top cross-bar 60, first and second deflectable arms 52, 54 extending from opposite ends of the top cross-bar 60 and defining a hose receiving opening 59 therebetween. A blocking member 70 can be slidably disposed on the first arm 52. The frame can have a variety of configurations, but in general, the top cross-bar 60 can be configured to facilitate mounting of the frame onto a support structure. While various mounting techniques can be used, in one embodiment as shown the top cross-bar 60 can have two circular bends 62, 64 formed therein and spaced along its length between the arms 52, 54. Each bend 62, 64 can define an opening configured to receive a fastener, such as a screw, therethrough. The first arm 52 and the second arm 54 can extend distally from opposite ends of the top cross-bar 60 and can converge toward one another in a distal direction. In particular, a first end of each arm 52, 54 coupled to the cross-bar 60 can be positioned at a distance W1 apart from one another that is greater than a distance W2 between a second end of each arm 52, 54 defining the opening 59. As such, the opening 59 between the arms 52, 54 is smaller at the distal ends, and larger proximally for seating a hose therein. Each arm 52, 54 can be straight, or each arm 52, 54 can bend 56, 58 near the distal end such that a distal-most portion of each arm 52, 54 diverges away from one another for guiding a hose into the opening. While the arms 52, 54 can be identical, in one embodiment the second arm 54 can have a U shape, and a distalmost point 52d of the first arm 52 can correspond to a bottom curve 54d of the U-shape of the second arm 54. While a U shape is shown herein, the second arm 54 can have a variety of shapes that allow the second arm 54 to support a hose. The distalmost point 52d of the first arm 52 can terminate in a cap 53 at a terminal end of the arm 52. The second arm 54 can also terminate in a cap 55. The arms 52, 54 and the cross-bar 60 can be formed from separate components, and the arms can be hingedly mated to the cross-bar. In other embodiments, the arms 52, 54 can be directly mounted to a surface and need not include a cross-bar 60. The shape of the arms can also vary, and is not limited to the configuration as shown.

The frame of the hose clip 50 can be constructed of a deflectable or elastic material, such as metal tubing or wire. The material should allow the arms 52, 54 to move apart when a predetermined force is applied thereto to thereby expand the opening 59, and to return to the first position as shown in FIG. 3A when the force is released. A person skilled in the art will appreciate that the frame can be formed from a variety of materials and can have any number of configurations.

The blocking member 70, which is mounted on the first arm 52, can also have various configurations. As shown, it has an upper conical portion 70u and a lower conical portion 701 that increase in diameter toward a mid max-diameter portion 78. The blocking member 70 has a distal end 74 and a proximal end 76, and cross-sectional areas of the blocking member 70 can be smallest at each end 74, 76 and can gradually expand to a widest area at the mid-portion 78 disposed between the two ends 74, 76. As such, the blocking member 70 can have a shape similar to a diamond. Outer surfaces of the blocking member 70 can thus slope outward to the mid-portion 78 from each end 74, 76. The mid-portion 78 is illustrated as being formed closer to the distal end 74, but the exact location of the mid-portion 78 can vary. The shape of each portion 70u, 701, 78 can also vary. For example, cut-outs 80 can be formed in the outer surface of the upper portion 70u of the blocking member 70 between the mid-portion 78 and the proximal end 76 for a variety of reasons, such as to reduce the material needed to form the blocking member 70 and/or to reduce the weight of the blocking member 70. The outer surface of the lower portion 701 of the blocking member 70 between the mid-portion 78 and the distal end 74 can be solid, as illustrated, but various cut-outs can be formed in other embodiments. A solid angled surface on the lower portion 701 can facilitate contact with a hose and sliding movement of the blocking member 70 during insertion of the hose, as will be discussed in more detail below.

As noted above, the blocking member 70 can be slidably disposed on one of the arms, for example on the first arm 52 between the bend 56 and the cross-bar 60. The bend 56 can thus help maintain the blocking member 70 on the first arm 52. The blocking member 70 can have a lumen 72 running along a longitudinal axis of the blocking member 70 between the two ends 74, 76. The lumen 72 of the blocking member 70 can receive the arm 52 of the frame therethrough, and the blocking member 70 can be prevented from sliding past the bend 56 in the arm 52, thus being slidably disposed between the cross-bar 60 and the bend 56 on the arm 52 of the frame.

In order to facilitate proper positioning of the blocking member 70 during use, a compression spring 82 can be disposed along the arm 52 proximally to the blocking member 70. The compression spring 82 can expand the length of the arm 52 from the top portion 60 to the blocking member 70. A distal end 84 of the spring 82 can contact the proximal end 76 of the blocking member 70, and a proximal end 86 of the spring 82 can contact the top cross-bar 60. The spring 82 can be configured to bias the blocking member 70 in a distal-most position, as illustrated in FIGS. 3A-3B. When a proximal force is applied to the blocking member 70, the spring 82 can compress to allow proximal movement of the blocking member 70 as will be discussed below. When the force is released, the spring 82 can return the blocking member 70 to its first, distal position as shown in FIG. 3A. The blocking member 70 and the spring 82 can be made of a variety of materials, such as plastic for the blocking member and metal for the spring.

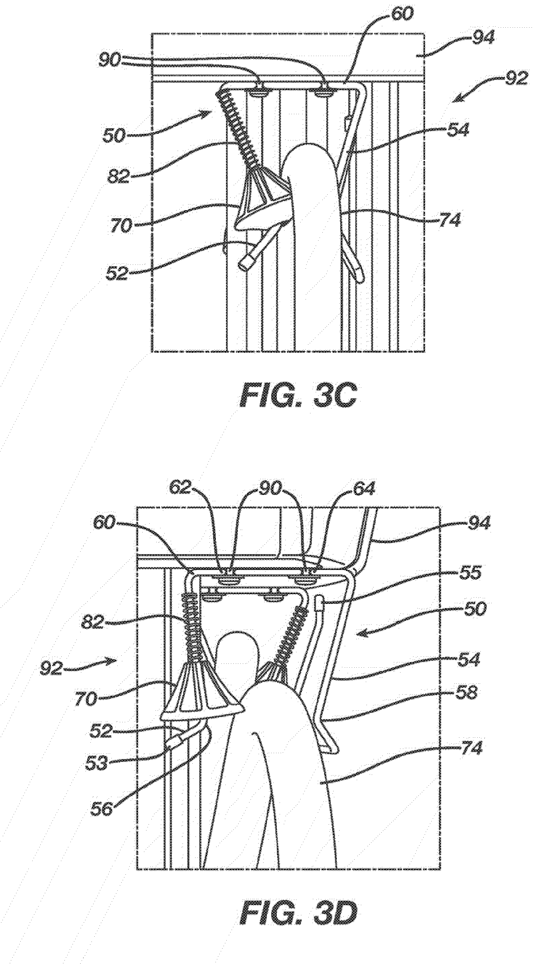

FIGS. 3C-3E illustrate the hose clip 50 during use coupled to a top portion 94 of a fuel dispensing unit 92 similar to that of the fuel dispensing unit 1. For example, the hose clip 50 can be bolted onto an undersurface of the top portion 94 using bolts 90 inserted through the circular bends 62, 64 of the top cross-bar 60 of the hose clip 50. A fuel hose 74, similar to the hose 7, can be received within the clip 50 and can rest on an upper surface of the blocking member 70 and the arm 54 when the hose 74 is in place and waiting for use. The shape of the blocking member 70, and in particular the max-diameter mid-portion 78, as well as the bends 56, 58 in the first and second arms 52, 54 can create the opening 59 having the width W2 that is less than a diameter of the hose 74 to retain the hose 74 therein. The spring 82 can maintain the blocking member 70 distally on the first arm 52 and toward the opening 59 between the bends 56, 58 of the arms 52, 54, thus maintaining the blocking member 70 in a first closed configuration to help prevent the hose 74 from passing distally through the opening and detaching from the hose clip 50.

As illustrated in FIG. 3D, the fuel hose 74 can be removed from the hose clip 50 by exerting a distal force on the hose 74. This distal force can cause the first arm 52 with the blocking member 70 and the second arm 54 to move laterally away from each other to expand the opening 59 until the arms 52, 54 are spread wide enough that the hose 74 can pass through the opening between the arms 52, 54 and drop away from the hose clip 50 entirely. The blocking member 70 will generally remain in its distal positon on the first arm 52 during this removal process and will move outward with the first arm 52. Thus, the movement of the arms 52, 54 is what allows the hose 74 to be removed from the clip 50. A person skilled in the art will appreciate that the frame can be configured to allow the arms 52, 54 to move apart only when a predetermined selected force is applied thereto. For example, the force can be large enough to prevent removal of the hose 74 during normal use, but to allow removal only when an excess length of hose is required.

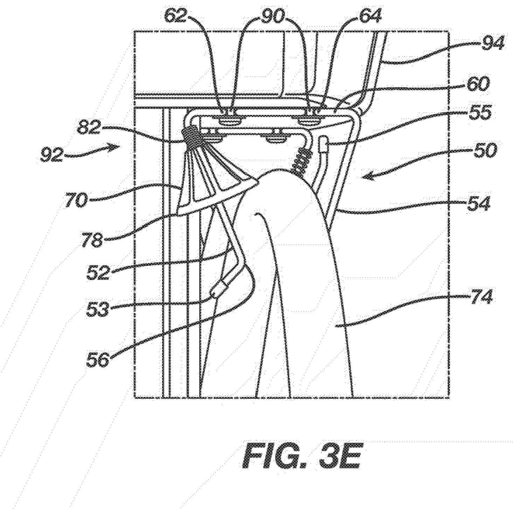

To reinsert the hose 74 into the hose clip 50, as illustrated in FIG. 3E, the hose 74 can be pushed up between the opening 59 of the arms 52, 54. As the hose 74 is pushed into the opening between the arms 52, 54, a proximal force will be applied to an outer surface of the lower portion 701 of the blocking member 70 between the distal end 74 and the mid-portion 78. The proximal force can cause the blocking member 70 to slide proximally along the arm 52 when the force applied to the blocking member 70 overcomes the biasing force of the spring 82. The max diameter mid-portion 78 can prevent the hose 74 from moving proximally past the blocking member 70, thus requiring the blocking member 70 to slide. As the hose 74 is forced proximally, the blocking member 70 continues to compress the spring 82 and slide proximally along the first arm 52 until the blocking member 70 is pushed proximally enough to expand the opening allow the hose 74 to be inserted through the opening between the arms 52, 54. As illustrated in FIG. 3E, when the blocking member 70 is in its proximal-most position, the hose 74 can pass between the bends 56, 58 in the arms 52, 54. At this point, the hose 74 can be moved far enough proximally that the hose 74 will pass over the mid-portion 78 of the blocking member 70 and the hose 74 will contact the upper surface of the blocking member 70 between the mid-portion 78 and the proximal end 76. The hose 74 and/or the spring 82 will then cause the blocking member 70 to be forced distally to block the opening between the arms 52, 54 distally to the hose 74. The blocking member 70 will slide distally until it contacts the bend 56, and the hose 74 can once again rest on the upper portion 70u of the blocking member 70 and between the two ends of the arm 54, waiting for use as illustrated in FIG. 3C.

The forces required to remove the hose 74 and to return the hose 74 can vary depending on the situation. For example, a first force to return the hose 74 to the clip 50 can be less than a second force required to remove the hose 74 from the hose clip 50. This can be achieved by providing a spring with a compression force that is less than a force required to move the arms apart. The actual amount of force required for removal or return of the hose 74 can be varied through a variety of means, such as the exact structures and dimensions of each component in a clip and the materials used. The force can be varied such that the first force required to return the hose 74 can effectively be zero. This can also be achieved by removing the spring entirely.

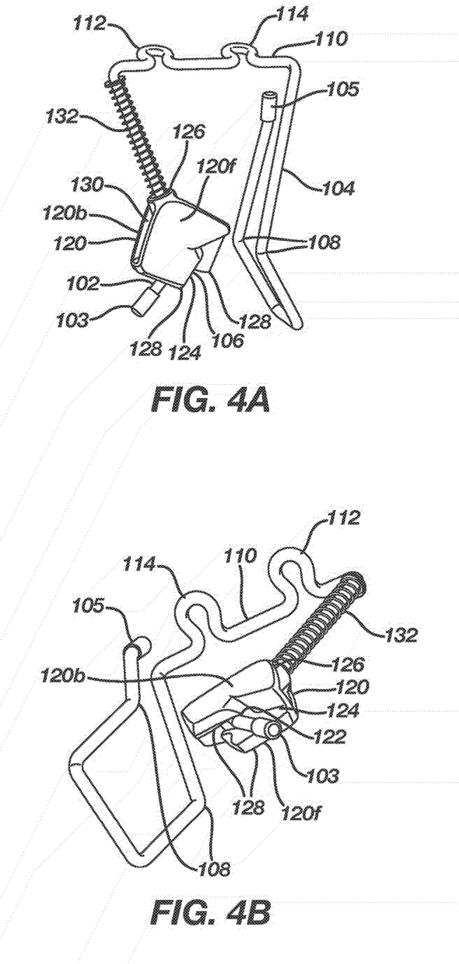

FIGS. 4A-4B illustrate another embodiment of a hose clip 100 having a frame that is similar to that of hose clip 50, but that includes a different blocking member 120. The clip 100 can have a frame with a top cross-bar 110 and first and second arms 102, 104 extending on opposite sides thereof, as described above. The top cross-bar 110 can have circular bend portions 112, 114 configured to allow mounting of the clip 100 onto an upper portion of a fuel dispensing unit, such as the top portion 10 of fuel dispensing unit 1. The first and second arms 102, 104 can have bends 106, 108 there along and can be shaped as described above, and each arm 102, 104 can terminate in caps 103, 105, respectively. The bend 106 can be a 90 degree angle.

The blocking member 120 and a spring 132 can be slidably disposed on the first arm 102 between the top portion 110 and the bend 106, as described above. The shape of the blocking member 120 can be similar to the blocking members described above, where a mid-portion 158 is larger than proximal and distal ends. In this embodiment, the blocking member 120 can be generally in the shape of a diamond. The blocking member 120 can have front and back portions 120f, 120b that mate together to engage the first arm 102 therebetween. Various mating techniques can be used to mate the front and back portions 120f, 120b, such as a snap-fit, fasteners, etc. The front and back portions 120f, 120b can define a lumen 122 extending between the proximal end 126 to the distal end for seating the first arm 102. Cut-outs 130 can be formed along opposed sides of the front and back portions 120f, 120b of the blocking member 120. The cut-outs 130 can be formed for a variety of reasons, such as to reduce the use of material during manufacturing. Each portion 120f, 120b can also have wings 128 at the distal-most end with an opening or groove 124 formed therebetween. The groove 124 can be configured to allow a distal portion of the first arm 102 to extend at an angle therefrom. The groove 124 can be configured to be angled and shaped such that the blocking member 120 can rotate or pivot as it moves proximally along the arm 102. For example, the groove 124 can be configured so that, during hose return, a hose such as the hose 74 can move the blocking member 120 proximally, causing the blocking member 120 to slide proximally along the arm 102 from a distalmost position. The groove 124 can be shaped to cause the blocking member 120 to pivot or rotate approximately 90 degrees when the blocking member 120 has slid slightly proximately along the arm 102, thus causing an opening that can allow the hose 74 to pass. The groove 124 can also be shaped so that, when the blocking member 120 returns distally after passage of the hose 74, the blocking member 120 rotates or pivots back to its original angle to block the hose 74. The bend 106 can have a 90 degree angle and can be configured to fit into the groove 124 and configured to assist in rotation and prevention of the blocking member 120 from sliding off the arm 102.

In use, the blocking member 120 can function similar to blocking member 70 above. In particular, the blocking member 120 can slide and pivot between a first distal position and angle along the first arm 102, as shown, and a second proximal position and angle along the first arm 102 where the spring is compressed. The blocking member 120 can prevent removal of the hose in the first position until a force greater than a threshold force is applied to the hose to cause the arms 102, 104 to move apart. In particular, during removal of a hose, such as the hose 74, the arms 102, 104 can deflect laterally away from each other due to a distal force of the hose 74, while the blocking member 120 can remain in its distal position on the first arm 102 from a distal force of the spring 132 and/or the hose 74. Because the blocking member 120 can extend into an opening 159 between the arms 102, 104, the shape of the blocking member 120 and the second arm 104 can create the opening 159 having a width that is less than a diameter of the hose 74 to retain the hose therein. However as the distal force is applied to the hose 74 and the arms 102, 104 spread laterally, the arms 102, 104 can spread wide enough that the hose 74 can pass through the opening 159 between the blocking member 120 and the bend 108, thereby detaching from the hose clip 100. This removal process will be similar to that of the hose clip 50.

The blocking member 120 can allow for easy insertion of the hose between the arms 102, 104 by sliding proximally along the first arm 102 when a hose is inserted against the blocking member 120 and the second arm 104. In particular, when reinserting the hose 74, a proximal force on a bottom surface of the blocking member 120 from the hose 74 can cause compression of the spring 132 and proximal movement of the blocking member 120 along the first arm 102. The hose 74 can exert the proximal force on one of the wings 128 of the blocking member 120. The angled surface of the wing 128 adjacent the opening can help guide the hose into the opening. As discussed above, the blocking member 120 can also pivot or rotate between a first angle blocking the opening 159 and a second angle allowing insertion of the hose 74 through the opening 159. Once the hose 74 exerts enough proximal force to compress the spring 132 and slide the blocking member 120 far enough proximally and rotate the blocking member 120, such as by approximately 90 degrees, the hose 74 can move into the opening 159 and subsequently move proximally past the max diameter mid-portion 158 of the blocking member 120. Once the hose 74 moves proximally past the blocking member 120, the blocking member 120 can be forced distally again by the spring 132 and/or the hose 74 and can rotate to a starting angle to block the opening 159 between the arms 102, 104. The hose 74 can then rest on the upper surface of the blocking member 120 and the second arm 104 to retain the hose 74 within the clip 100 on the fuel dispensing unit.

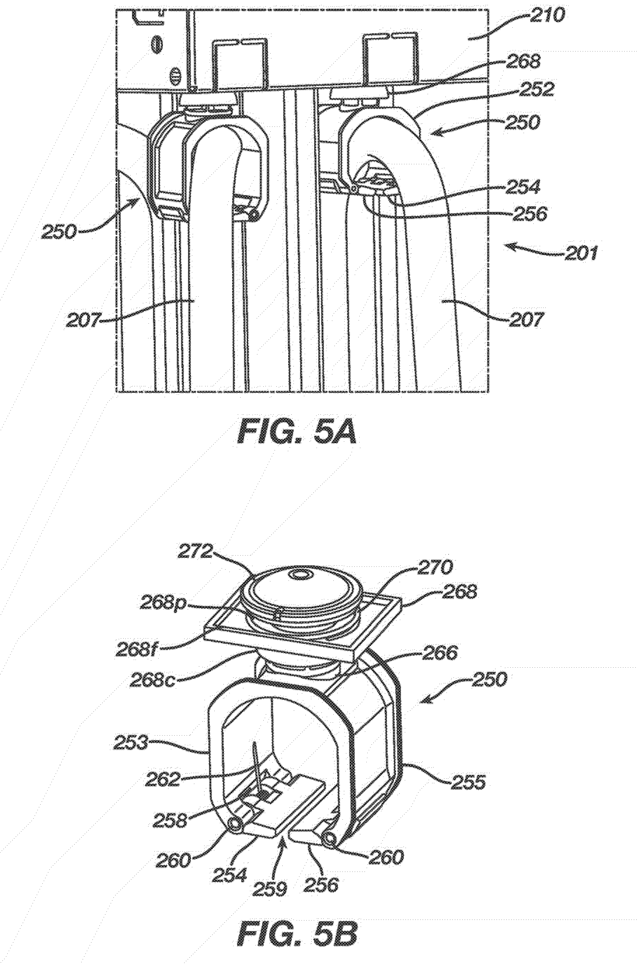

FIGS. 5A-5B illustrate another embodiment of a hose clip 250 that is similar to hose clip 50. For example, one or more hose clips 250 can be configured to couple one or more corresponding fuel hoses 207 to a top portion 210 of a fuel dispensing unit 201, similar to fuel dispensing unit 1. In this embodiment, the hose clip 250 can have a U-shaped body and an upper housing 268 mounted to the body. An upper cross-bar 266 of the body can have the upper housing 268 mounted thereon for connecting the clip 250 to the unit. The housing 268 can have a lower, circular portion 268c that engages the cross-bar 266, a plate 268f in the shape of a rectangle that extends laterally out from the housing 268, and a post portion 268p that can extend proximally from the plate 268f. A spring 270 can extend around the post portion 268p and can rest on an upper surface of the plate 268f of the housing 268. The spring 270 can be covered proximally by a cap 272. The clip can be made of a variety of materials, such as plastic and/or metal.

The clip 250 can be attached to the top portion 210 of the fuel dispensing unit 201 by a variety of means, such as an interaction of the housing 268 and the top portion 210. The plate 268f of the housing 268 can extend proximally into the top portion 210 of the fuel dispensing unit 201 and can rest on an inner surface of the top portion 210. The circular portion 268c of the housing 268 can rest against an outer bottom surface of the top portion 210 and distally to the plate 268f. Thus part of the housing 268 can be inside the top portion 210, and part of the housing 268 can be outside the top portion 210, as illustrated in FIG. 5A. The plate 268f of the housing 268 along with the post 268p, the spring 270, and the cap 272 can be inside the top portion 210. The plate 268f can expand along the top portion 210 and can be configured to hold the clip 250 in place while the spring 270 and cap 272 can be configured to provide flexibility and stress control if the clip 250 shifts or moves when attached to the fuel dispensing unit 201. The circular portion 268c and the post 268p can have a variety of configurations, such as a single post that can move relative to the plate 268f with the spring 270 and the cap 272 so that the post extends proximally. This arrangement can allow the clip body to move proximally and distally by a small amount relative to the top portion 210, which can help prevent damage to the clip 250 if excess force is applied to the clip 250. A person skilled in the art will appreciate that the housing 268 can be used to mount any of the clips disclosed herein.

The clip body can include the upper cross-member 266 and first and second deflectable arms 253, 255 extending distally therefrom. Each arm 253, 255 can have a corresponding flipper 254, 256 coupled to a distal end thereof and extending toward one another to define an opening therebetween at the distalmost end of the clip 250. The flippers 254, 256 can be pivotably attached to the first and second arms 253, 255 using pivot pins 260. Each flipper 256 can thus pivot about a corresponding pivot pin 260. Corresponding springs 258 can be coiled about each pivot pin 260. Each spring 258 can have a first leg 262 that extends proximally along the first and second arms 253, 255, and a second leg (not shown) that extends along or within each flipper 254, 256. The arms of each spring 258 can naturally rest at a 90 degree angle to each other, and the springs 258 can thus be configured to bias each flipper 254, 256 to extend toward one another and define a smallest opening 259 therebetween.

At rest, a fuel hose 207 can pass through the opening between the flippers 254, 256 and can rest in the circular center of the clip 250 against the flippers 254, 256. When a distal force is applied to the hose 207 to remove the hose 207 from the clip 250, the hose 207 can apply a distal force to an upper surface of the flippers, which will resist distal movement and transfer the force to the arms 253, 255 to force the arms 253, 255 to bend outwards. As the arms 253, 255 bend outwards, the opening 259 between the flippers 254, 256 can increase to a size that allows the hose 207 to pass therethrough. The hose 207 can then pass through the opening and detach from the hose clip 250. After the hose 207 passes therethrough, the arms 253, 255 can return to a resting position, as shown in FIGS. 5A-5B. When the hose 207 is reinserted into the hose clip 250, the hose 207 can apply a proximal force to the flippers 254, 256, causing them to pivot proximally until the flippers 254, 256 are far enough apart to allow passage of the hose 207 into the clip 250. Once the hose 207 moves proximally past the flippers 254, 256, they can then pivot back to a resting position, effectively blocking the opening and allowing the hose 207 to rest on the top surfaces of the flippers 254, 256. The force required to remove the hose 207 from the clip 250 is thus greater than the force required to return the hose 207 to the clip 250.

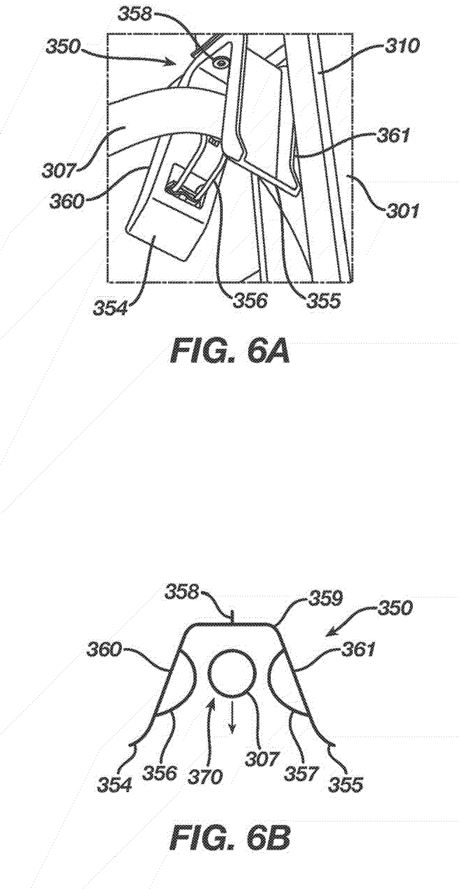

FIGS. 6A-6B illustrate another embodiment of a hose clip 350 that can engage a hose, similar to clip 50. For example, the hose clip 350 can be configured to couple a fuel hose 307 to a top portion 310 of a fuel dispensing unit 301, similar to fuel dispensing unit 1. The hose clip 350 can have an inverted U shaped body 352 with a cross-bar 359 and first and second compression arms 360, 361 extending distally from opposite ends thereof. The clip 350 can have a peg 358 extending from a proximal-most end thereof and configured to attach to the upper portion 310 of the fuel dispensing unit 301 through a variety of means, such as by using a bolt or screw. Other mating techniques, such as those described above, can also be used to mount the clip to a support.

The arms 360, 361 can be positioned opposite each other and can each have flared ends 354, 355 that diverge away from one another to help guide a hose into an opening 370 defined between the arms 360, 361. A blocking member 356, 357, such as a leaf spring, can be disposed on an inner surface of each arm 360, 361. Each blocking member 356, 357 can have a semicircular shape extending toward a center of the clip 350, to thereby define a reduced-width across the opening of the clip 350. The blocking members 356, 357 can be configured to substantially block the opening 370 on the distalmost end of the clip 350 when at rest. The blocking members 356, 357 can be configured to pivot at a distal end thereof such that the blocking members 356, 357 can be configured to rotate outwards during hose insertion and rotate towards each other when the hose is returned to the clip 350 and has passed by the blocking members 356, 357, thus locking the hose into the clip 350.

At rest, the hose 307 can be seated within the center of the clip 350, surrounded on the top by the cross-bar 359 and on the sides by the arms 360, 361. The blocking members 356, 357 can retain the hose within the clip 350. In particular, the hose 307 can rest against the semicircular curves of the blocking members 356, 357. When the hose 307 is removed from the clip 350, a distal force can be applied to the blocking members 356, 357. Since the blocking members 356, 357 are in a distal-most position, the hose 307 can cause the arms 360, 361 to start to deflect outwards and the blocking members 356, 356 can move outwards with the arms 360, 361 and thus no longer block the hose 307, causing them to deflect. As the opening expands, it will eventually be expanded laterally by a distance that allows passage of the hose 307 therethrough, thus allowing the hose 307 to detach from the clip 350.

When the hose 307 is reinserted into the clip 350, the hose 307 can be forced proximally into the arms 356, 357 such that the force of the hose 307 can cause the blocking members 356, 357 to rotate outwards along the arms 360, 361, thus allowing the opening between the arms 356, 357 to expand by an amount that allows the hose 307 to move proximally past the blocking members 356, 357. Once the hose 307 moves proximally past the blocking members 356, 357, the blocking members 356, 357 can rotate towards each other in the initial position to maintain the hose within the clip. In other embodiments, a spring can be incorporated that pushes the blocking members distally to help them return to a resting position.

## Claims

1. A hose clip (20), comprising:
a frame configured to be secured to a support structure, the frame defining an opening for receiving a hose (7); and
at least one blocking element coupled to the frame, the blocking element being movable between a first position in which the blocking element blocks access to the opening and blocks the opening to retain the hose therein once the hose is attached to the clip, and a second position in which the blocking element is moved away from the opening for allowing passage of a hose (7) through the opening;
**characterized in that** the blocking element moves from the first position to the second position during insertion of a hose (7) into the frame such that a first force is required to insert the hose (7) into the frame, and the blocking element remains in the first position during retraction of the hose (7) from the frame such that a second force that is greater than the first force is required to retract the hose (7) from the frame.

2. The hose clip (20) of claim 1, wherein the first force is lower than the second force.

3. The hose clip (20) of claim 1, wherein the blocking element pivots between the first position and the second position.

4. The hose clip (20) of claim 1, wherein the blocking element slides between the first position and the second position.

5. The hose clip (20) of claim 1, wherein the blocking element is biased to the first position.

6. The hose clip (20) of claim 1, wherein the blocking element is biased to the first position by a biasing spring.

7. The hose clip (20) of claim 1, wherein the blocking element includes a lower conical portion and an upper conical portion, and where the upper and lower conical portions increase in diameter toward one another.

8. The hose clip (20) of claim 1, wherein the frame is substantially U-shaped.

9. The hose clip (20) of claim 1, wherein the frame includes a cross-bar and first and second deflectable arms extending from opposite ends thereof.

10. A fuel dispenser (1), comprising:
a housing having a base cabinet with fuel dispensing components disposed therein, a top portion coupled to the base cabinet, and a hose (7) in fluid communication with the fuel dispensing components such that fuel can be delivered from the fuel dispensing components through the hose (7) for delivery to a motor vehicle; and
the hose clip (20) of claim 1 mounted on the top portion and having an opening for removably retaining the hose (7) therein, the hose clip (20) being configured to allow insertion of the hose (7) into the opening with a first force, and the hose clip (20) being configured to allow removal of the hose (7) with a second force that is greater than the first force.

11. The fuel dispenser (1) of claim 10, wherein the hose clip (20) is configured such that insertion of the hose (7) into the opening is in a substantial vertical direction.

12. The fuel dispenser (1) of claim 10, wherein the first force is lower than the second force.

13. The fuel dispenser (1) of claim 10, wherein the hose clip (20) is biased to retain the hose (7) therein.

14. The fuel dispenser (1) of claim 10, wherein the hose clip (20) has a first part and a second part that move away from each other to allow the hose (7) to be removed from the hose clip (20).

15. The fuel dispenser (1) of claim 10, wherein the hose clip (20) includes a blocking element that moves between a first position to allow insertion of the hose (7) into the opening, and a second position that blocks removal of a hose (7) until a second force is applied to the blocking element.

## Patentansprüche

1. Schlauchklemme (20), die Folgendes umfasst:
einen Rahmen, der dafür konfiguriert ist, an einer Stützstruktur befestigt zu werden, wobei der Rahmen eine Öffnung zum Aufnehmen eines Schlauchs (7) definiert,
wenigstens ein Sperrelement, das mit dem Rahmen verbunden ist, wobei das Sperrelement beweglich ist zwischen einer ersten Stellung, in der das Sperrelement einen Zugang zu der Öffnung sperrt und die Öffnung sperrt, um den Schlauch in derselben zurückzuhalten, sobald der Schlauch an der Klemme befestigt ist, und einer zweiten Stellung, in der das Sperrelement von der Öffnung weg bewegt ist, um einen Durchgang eines Schlauchs (7) durch die Öffnung zu ermöglichen,
**dadurch gekennzeichnet, dass** sich das Sperrelement während eines Einsetzens eines Schlauchs (7) in den Rahmen derart von der ersten Stellung zu der zweiten Stellung bewegt, dass eine erste Kraft erforderlich ist, um den Schlauch (7) in den Rahmen einzusetzen, und das Sperrelement während eines Herausziehens des Schlauchs (7) aus dem Rahmen derart in der ersten Stellung verbleibt, dass eine zweite Kraft, die größer ist als die erste Kraft, erforderlich ist, um den Schlauch (7) aus dem Rahmen herauszuziehen.

2. Schlauchklemme (20) nach Anspruch 1, wobei die erste Kraft geringer ist als die zweite Kraft.

3. Schlauchklemme (20) nach Anspruch 1, wobei das Sperrelement zwischen der ersten Stellung und der zweiten Stellung schwenkt.

4. Schlauchklemme (20) nach Anspruch 1, wobei das Sperrelement zwischen der ersten Stellung und der zweiten Stellung gleitet.

5. Schlauchklemme (20) nach Anspruch 1, wobei das Sperrelement zu der ersten Stellung vorgespannt wird.

6. Schlauchklemme (20) nach Anspruch 1, wobei das Sperrelement durch eine Vorspannfeder zu der ersten Stellung vorgespannt wird.

7. Schlauchklemme (20) nach Anspruch 1, wobei das Sperrelement einen unteren kegelförmigen Abschnitt und einen oberen kegelförmigen Abschnitt einschließt und wobei der obere und der untere kegelförmige Abschnitt zueinander hin im Durchmesser zunehmen.

8. Schlauchklemme (20) nach Anspruch 1, wobei der Rahmen im Wesentlichen U-förmig ist.

9. Schlauchklemme (20) nach Anspruch 1, wobei der Rahmen einen Querträger und einen ersten und einen zweiten ablenkbaren Arm, die sich von entgegengesetzten Enden desselben aus erstrecken, einschließt.

10. Kraftstoff-Zapfanlage (1), die Folgendes umfasst:
ein Gehäuse, das einen Unterschrank mit Kraftstoffabgabekomponenten, die darin angeordnet sind, einen oberen Abschnitt, der mit dem Unterschrank verbunden ist, und einen Schlauch (7), derart in Fluidverbindung mit den Kraftstoffabgabekomponenten, dass Kraftstoff von den Kraftstoffabgabekomponenten durch den Schlauch zur Abgabe an ein Kraftfahrzeug abgegeben werden kann, aufweist, und
die Schlauchklemme (20) nach Anspruch 1, die an dem oberen Abschnitt angebracht ist und eine Öffnung zum abnehmbaren Zurückhalten des Schlauchs (7) in derselben aufweist, wobei die Schlauchklemme (20) dafür konfiguriert ist, ein Einsetzen des Schlauchs (7) in die Öffnung mit einer ersten Kraft zu ermöglichen, und
wobei die Schlauchklemme (20) dafür konfiguriert ist, ein Abnehmen des Schlauchs (7) mit einer zweiten Kraft, die größer ist als die erste Kraft, zu ermöglichen.

11. Kraftstoff-Zapfanlage (1) nach Anspruch 10, wobei die Schlauchklemme (20) derart konfiguriert ist, dass ein Einsetzen des Schlauchs (7) in einer im Wesentlichen vertikalen Richtung erfolgt.

12. Kraftstoff-Zapfanlage (1) nach Anspruch 10, wobei die erste Kraft geringer ist als die zweite Kraft.

13. Kraftstoff-Zapfanlage (1) nach Anspruch 10, wobei die Schlauchklemme (20) vorgespannt wird, um den Schlauch (7) in derselben zurückzuhalten.

14. Kraftstoff-Zapfanlage (1) nach Anspruch 10, wobei die Schlauchklemme (20) einen ersten Teil und einen zweiten Teil aufweist, die sich voneinander weg bewegen, um zu ermöglichen, dass der Schlauch (7) aus der Schlauchklemme (20) entfernt wird.

15. Kraftstoff-Zapfanlage (1) nach Anspruch 10, wobei die Schlauchklemme (20) ein Sperrelement einschließt, das sich zwischen einer ersten Stellung, um ein Einsetzen des Schlauchs (7) in die Öffnung zu ermöglichen, und einer zweiten Stellung, die ein Entfernen eines Schlauchs (7) sperrt, bis eine zweite Kraft auf das Sperrelement ausgeübt wird, bewegt.

## Revendications

1. Collier de serrage (20), comprenant:
un cadre configuré pour être fixé à une structure de support, le cadre définissant une ouverture pour recevoir un flexible (7); et
au moins un élément de blocage couplé au cadre, l'élément de blocage étant mobile entre une première position dans laquelle l'élément de blocage bloque l'accès à l'ouverture et bloque l'ouverture pour y retenir le flexible une fois que le flexible est fixé au collier, et une deuxième position dans laquelle l'élément de blocage est éloigné de l'ouverture pour permettre le passage d'un flexible (7) à travers l'ouverture;
**caractérisé en ce que** l'élément de blocage se déplace de la première position à la deuxième position pendant l'insertion d'un flexible (7) dans le cadre de telle sorte qu'une première force soit nécessaire pour insérer le flexible (7) dans le cadre, et l'élément de blocage reste en la première position pendant la rétraction du flexible (7) du cadre de telle sorte qu'une deuxième force qui est supérieure à la première force soit nécessaire pour rétracter le flexible (7) du cadre.

2. Collier de serrage (20) selon la revendication 1, dans lequel la première force est inférieure à la deuxième force.

3. Collier de serrage (20) selon la revendication 1, dans lequel l'élément de blocage pivote entre la première position et la deuxième position.

4. Collier de serrage (20) selon la revendication 1, dans lequel l'élément de blocage coulisse entre la première position et la deuxième position.

5. Collier de serrage (20) selon la revendication 1, dans lequel l'élément de blocage est sollicité vers la première position.

6. Collier de serrage (20) selon la revendication 1, dans lequel l'élément de blocage est sollicité vers la première position par un ressort de sollicitation.

7. Collier de serrage (20) selon la revendication 1, dans lequel l'élément de blocage comprend une partie conique inférieure et une partie conique supérieure, et où les parties coniques supérieure et inférieure augmentent de diamètre l'une vers l'autre.

8. Collier de serrage (20) selon la revendication 1, dans lequel le cadre est sensiblement en forme de U.

9. Collier de serrage (20) selon la revendication 1, dans lequel le cadre comprend une barre transversale et des premier et deuxième bras pouvant être déviés s'étendant depuis ses extrémités opposées.

10. Distributeur de carburant (1), comprenant:
un boîtier ayant une armoire de base avec des composants de distribution de carburant disposés à l'intérieur, une partie supérieure couplée à l'armoire de base, et un flexible (7) en communication fluidique avec les composants de distribution de carburant de sorte que le carburant puisse être distribué à partir des composants de distribution de carburant à travers le flexible (7) en vue de la livraison à un véhicule à moteur; et
le collier de serrage (20) selon la revendication 1 monté sur la partie supérieure et ayant une ouverture pour y retenir de manière amovible le flexible (7), le collier de serrage (20) étant configuré pour permettre l'insertion du flexible (7) dans l'ouverture avec une première force, et le collier de serrage (20) étant configuré pour permettre le retrait du flexible (7) avec une deuxième force qui est supérieure à la première force.

11. Distributeur de carburant (1) selon la revendication 10, dans lequel le collier de serrage (20) est configuré de telle sorte que l'insertion du flexible (7) dans l'ouverture se fasse dans une direction sensiblement verticale.

12. Distributeur de carburant (1) selon la revendication 10, dans lequel la première force est inférieure à la deuxième force.

13. Distributeur de carburant (1) selon la revendication 10, dans lequel le collier de serrage (20) est sollicité pour retenir le flexible (7) à l'intérieur.

14. Distributeur de carburant (1) selon la revendication 10, dans lequel le collier de serrage (20) possède une première partie et une deuxième partie qui s'éloignent l'une de l'autre pour permettre au flexible (7) d'être retiré du collier de serrage (20).

15. Distributeur de carburant (1) selon la revendication 10, dans lequel le collier de serrage (20) comprend un élément de blocage qui se déplace entre une première position pour permettre l'insertion du flexible (7) dans l'ouverture, et une deuxième position qui bloque le retrait d'un flexible (7) jusqu'à ce qu'une deuxième force soit appliquée à l'élément de blocage.
